# EUROPEAN PATENT APPLICATION

(11) **EP 4 711 766 A1**
(43) Date of publication of application: **18.03.2026**
(21) Application number: 24200860.5
(22) Date of filing: 17.09.2024
(51) Int. Cl.: G01N 35/00, B25J 9/00, B25J 19/02

(54) **ROBOT FOR AUTOMATICALLY EQUIPPING AND OPERATING TEST INSTRUMENT**

(71) Applicant: Roche Diagnostics International AG, 6343 Rotkreuz (CH)
(72) Inventor: BEKRIC, Mirzet, 6343 Rotkreuz ZG (CH)
(74) Representative: Altmann Stößel Dick Patentanwälte PartG mbB

(57) **Abstract**

A robot (114) for automatically equipping and operating at least one test instrument (116) is disclosed. The robot (114) comprises:
- at least one robotic arm (132) comprising at least one base (134) and at least one end effector (136), wherein the robotic arm (132) is configured for moving the end effector (136) from at least one first position to at least one second position;
- at least one tube gripper (140) arranged and connected to the at least one end effector (136) and configured for gripping and releasing at least one sample tube (126);
- at least one artificial finger (142) arranged and connected to the at least one end effector (136) and configured for operating at least one input unit (118) of the at least one test instrument (116);
- at least one scanning device (144) arranged and connected to the at least one end effector (136) and configured for scanning at least one item of information of the at least one sample tube (126);
- at least one e-paper display (148) configured for reproducing the at least one scanned item of information.

Further disclosed are a method of automatically equipping and operating at least one test instrument (116), a test system (110) for automatically performing at least one test procedure on at least one sample (112) and a method of automatically performing at least one test procedure.

## Description

### Technical Field

The invention relates to a robot for automatically equipping and operating at least one test instrument, to a method of automatically equipping and operating at least one test instrument, to a test system for automatically performing at least one test procedure on at least one sample and to a method of automatically performing at least one test procedure. The devices and methods of the present invention, as an example, may be used in the field of medical or chemical laboratories in which typically at least one sample has to be handled. The sample may contain a liquid sample, for example a biological sample, such as blood, blood plasma, blood serum, urine, saliva or other types of body fluid, and/or a chemical sample, such as a reagent, a reactant or a solvent. As an example, the robot may be used for equipping at least one test instrument with the sample and may operate for operating the test instrument, such as for performing an analytical and/or a pre-analytical step. However, other types of applications are also feasible.

### Background art

In the field of medical or chemical laboratories, even though making use of automated sample handling, generally still require human skill and coordination for a plurality of tasks. As an example, tasks that involve coordination of both timing and positioning of samples, such as when operating laboratory equipment for performing test procedures on samples, are typically performed by laboratory personnel and/or on site staff. However, due to usually temperature sensitive samples, working environment and conditions are challenging for humans.

Similarly, testing and quality control of laboratory equipment, usually done under real operating conditions, typically also requires human skill and coordination. Thus, as an example, handling samples, operating laboratory equipment as well as testing and quality control of laboratory equipment are usually performed by laboratory personnel and/or on-site staff under challenging environmental conditions.

Reliability and accuracy of sample handling, as well as the desire to speed up operating and testing procedures are technical challenges that remain. In particular, increasing the speed of handover operations, reducing handling errors and automating system operation is crucial for increasing throughput of laboratory procedures.

### Problem to be solved

It is therefore desirable to provide devices and methods which at least partially address the above-mentioned technical challenges. Specifically, devices and methods shall be proposed which allow for an automated, fast, reliable and accurate performance of laboratory tasks, such as equipping and operating test systems and performing test procedures.

### Summary

This problem is addressed by a robot for automatically equipping and operating at least one test instrument, by a method of automatically equipping and operating at least one test instrument making use of the robot, by a test system for automatically performing at least one test procedure comprising the robot and by a method of automatically performing at least one test procedure making use of the test system with the features of the independent claims. Advantageous embodiments which might be realized in an isolated fashion or in any arbitrary combinations are listed in the dependent claims as well as throughout the specification.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

In a first aspect of the present invention, a robot for automatically equipping and operating at least one test instrument is disclosed.

The term "robot" as used herein is a broad term it is to be given its ordinary and customary meaning to a person of ordinary skill in the art and is not to be limited to a special or customized meaning. The time specifically may refer, without limitation, to an arbitrary programmable machine, such as a computer, configured for performing handling, operating, assembling and/or processing steps by interacting with one or more objects. Specifically, the robot may be configured for performing the handling, operating, assembling and/or processing steps autonomously, e.g. in the absence of external assistance or instructions, such as for example without human assistance, in particular, without the assistance from personnel and/or lab technicians. Specifically, the robot may be configured to perform the handling, operating, assembling and/or processing steps independent from external input, by using pre-programmed routines. As an example, the robot may also be referred to as industrial robot and may be configured for performing tasks required in an industrial environment, such as in a chemical and/or medical laboratory. In particular, the robot may be configured, e.g. by following pre-programmed routines, to carry out a task process autonomously. Additionally or alternatively, the robot may be configured to react to specific situations, e.g. vary the execution of the task, within limits depending on information available to the robot, such as sensor information and/or instructions provided to the robot before, during, or after performing the task. For example, for performing one or more handling, operating, assembling and/or processing tasks, the robot may comprise one or more manipulators, controllers, effectors and sensors.

Specifically, the robot may comprise at least one processor for controlling one or more of the handling, operating, assembled and/or processing tasks. The term "processor" as used herein is a broad term and is to be given its ordinary and customary meaning to a person of ordinary skill in the art and is not to be limited to a special or customized meaning. The term specifically may refer, without limitation, to an arbitrary electronic circuit configured for operating on data. In particular, the processor may be configured for performing operations on at least one data base, such as on a memory, e.g. on a memory of the mobile device. As an example, the processor may specifically be or may comprise an integrated circuit (IC), such as an application-specific integrated circuit (ASIC) or a field programmable gate array (FPGA).

In particular, the robot is configured for automatically equipping and operating at least one test instrument. As an example, the robot, by following one or more pre-programmed routines, may be configured for automatically equipping and automatically operating the at least one test instrument.

The term "automatically equipping" as used herein is a broad term and is to be given its ordinary and customary meaning to a person of ordinary skill in the art and is not to be limited to a special or customized meaning. The term specifically may refer, without limitation, to the process of automatically loading and/or feeding of one or more objects into and/or to an arbitrary machine and/or instrument. In particular, the loading and/or feeding may be performed autonomously, e.g. by the robot, such as by following one or more pre-programmed routines, i.e. without human assistance, in particular, without the assistance from personnel and/or lab technicians. In particular, the automatically equipping of the test instrument may be or may comprise a process of loading and/or feeding at least one sample tube into and/or to the test instrument, such as to a tube receptacle to the test instrument, e.g. into a receiving portion and/or into a receiving device of the test instrument, by the robot, specifically by an interaction of one or more of the robot's manipulators, controllers, effectors and sensors with one or more of each other, the sample tubes and the test instrument. Thus, as an example, the automatically equipping of the test instrument, may be performed by the robot autonomously following one or more pre-programmed equipping routines.

The term "automatically operating" as used herein is a broad term and is to be given its ordinary and customary meaning to a person of ordinary skill in the art and is not to be limited to a special or customized meaning. The term specifically may refer, without limitation, to the process of automatically controlling one or more functions of an arbitrary machine and/or instrument. In particular, the controlling may be performed autonomously, e.g. by the robot, such as by following one or more pre-programmed routine, i.e. without human assistance, in particular, without the assistance from personnel and/or lab technicians. Specifically, the automatically operating of the test instrument may be or may comprise a process of instructing the test instrument to perform one or more test procedures, i.e. starting and/or stopping the test procedure the test instrument is programmed to perform, and additionally or alternatively, providing one or more setting, such as values and/or parameters, for the performance of the test procedure the test instrument is programmed to perform, by the robot, specifically by an interaction of one or more of each other and the test instrument. Thus, as an example, the automatically operating if the test instrument, may be performed by the robot autonomously following one or more pre-programmed operating routines.

The term "test instrument" as used herein is a broad term it is to be given its ordinary and customary meaning to a person of ordinary skill in the art and is not to be limited to a special or customized meaning. The term specifically may refer, without limitation, to an arbitrary devise and/or system configured for performing at least one test procedure, specifically for performing at least one medical and/or chemical test procedure. As an example, the test instrument may be configured for performing at least one diagnostic measurement, such as a measurement comprising determining at least one diagnostic parameter. In particular, the test instrument may be designed to quantitatively and/or qualitatively determine at least one diagnostic parameter in an arbitrary sample or aliquot of bodily fluid. For example, the bodily fluid may comprise one or more of blood interstitial fluid, urine, saliva or other types of body fluids. The result of determining a diagnostic parameter, as an example, may be a concentration of at least one analyte and/or the presence or absence of the at least one analyte and/or another value of the at least one diagnostic parameter to be determined, such as a coagulation parameter. As an example, a concentration and/or a presence or absence of at least one analyte, such as glucose, triglycerides, lactate, cholesterol or other types of analytes, may be determinable by the test instrument. Additional or alternative analytes to be detected may be viruses, such as the SARS-CoV-2 coronavirus. Specifically, as an example, the test instrument may be configured for performing a polymerase chain reaction (PCR) process for detecting the presence of analytes in the sample. Other types of test procedures may be performed by the test instrument.

The test instrument comprises at least one input unit as described in further detail below. Further, the test instrument may comprise at least one tube receptacle, such as receiving means, configured for receiving the sample tube as described in further detail below, in order to perform one or more of the test procedures on the sample contained in the sample tube. Furthermore, the test instrument may comprise at least one scanner, such as a scanning device, configured for scanning information. As an example, the scanner of the test instrument may be built and/or function in a similar manner as a scanning device of the robot, which will be described in further detail below. Thus, the scanner may for example be similar or even equal to the scanning device of the robot. Other arrangements and/or set-ups of the scanner of the test instrument compared to the robot, however, are feasible. Specifically, the test instrument's scanner and the robot's scanning device may be different from each other. For example, the scanner of the test instrument may be an optical and/or visual scanner, while the robot's scanning device may be an electronic scanner, or vice versa.

The robot comprises at least one robotic arm comprising at least one base and at least one end effector, wherein the robotic arm is configured for moving the end effector from at least one first position to at least one second position. The term "robotic arm" as used herein is a broad term and is to be given its ordinary and customary meaning to a person of ordinary skill in the art and is not to be limited to a special or customized meaning. The term specifically may refer, without limitation, to an arm-like mechanism comprising a series of at least two segments, more specifically a series of at least three segments, connected by one or more joints. In particular, the robotic arm, specifically the series of segments, at one end may comprise the base and at the other end may comprise the at least one end effector. The robotic arm may also be referred to as "manipulator". As an example, the robotic arm, by relative movement of the segments, may be configured for performing at least one movement in a predefined number of degrees of freedom. As an example, the robot arm via its plurality of serially arranged segments in conjunction with the connecting joints, configured for connecting the serially arranged segments, may be configured for moving the end effector in up to six degrees of freedom relative to the base of the robotic arm. Specifically, the robotic arm may be configured for moving the end effector in up to six degrees of freedom, within a predefined reaching range of the robotic arm, wherein the reaching range may particularly depend on one or more of a length of the robotic arm and a movement range of one or more of the arm's joints.

The term "base" as used herein is a broad term and is to be given its ordinary and customary meaning to a person of ordinary skill in the art and is not to be limited to a special or customized meaning. The term specifically may refer, without limitation, to a bearing end of the robotic arm. In particular, the base may be or may comprise an end of the robotic arm, the position of which is fixed and/or defined by a bearing configured for supporting the robotic arm completely. As an example, the base may also be referred to as "fixed end" and/or "supporting end" of the robotic arm, as opposed to a "free end" on the other end of the serially arranged segments of the robotic arm.

The term "end effector" as used herein is a broad term and is to be given its ordinary and customary meaning to a person of ordinary skill in the art and is not to be limited to a special or customized meaning. The term specifically may refer, without limitation, to an actuator arranged at a free end of the robotic arm. In particular, the end effector may be connected to or may comprise one or more tools configured to transform one or more input signals into mechanical energy. As an example, the end effector may be fixedly connected, i.e. in a mechanically rigid fashion, to the one or more tools. Such tools may for example be one or more of a tube gripper and an artificial finger.

Further, the robot comprises at least one tube gripper arranged and connected to the at least one end effector and configured for gripping and releasing at least one sample tube. The term "tube gripper" as used herein is a broad term and is to be given its ordinary and customary meaning to a person of ordinary skill in the art and is not to be limited to a special or customized meaning. The term specifically may refer, without limitation, to a device configured for positioning the sample tube. The tube gripper may specifically comprise at least two centering gripper fingers, such as at least two gripper jaws, for performing a gripping and releasing motion in order to grip and release the at least one sample tube. In particular, the at least two centering gripper fingers of the tube gripper, when gripping the sample tube, may be configured for performing at least one closing movement around the sample tube, at least partially enclosing the sample tube between them, thereby holding the sample tube. For releasing the sample tube, the at least two centering gripper fingers of the tube gripper may perform a reverse movement, thereby freeing the sample tube from its gripping fingers. The tube gripper may specifically comprise at least one gripper axis, around which the centering gripper fingers may be rotatable, wherein the robot, in order to grip the at least one sample tube, may be configured for aligning the gripper axis with a tube axis of the sample tube.

The term "sample tube" as used herein is a broad term and is to be given its ordinary and customary meaning to a person of ordinary skill in the art and is not to be limited to a special or customized meaning. The term specifically may refer, without limitation, to an arbitrary tube shaped sample holder configured for holding at least one sample. The sample tube may be a piece of laboratory glass- or plastic-ware optionally comprising a cap on its upper end. As an example, a tube diameter of the sample tube may range from 5 mm to 20 mm, specifically from 8 mm to 18 mm, more specifically, from 11 mm to 16 mm. For example, the sample tube may be a glass or transparent plastic tube. The sample tube may be a cylindrical tube, e.g. a cylindrical tube having a circular and/or polygonal cross-section. As an example, the sample tube may comprise at least one tube axis, arranged through the geometrical center of the circular and/or polygonal cross-section.

The term "sample" as used herein is a broad term and is to be given its ordinary and customary meaning to a person of ordinary skill in the art and is not to be limited to a special or customized meaning. The term specifically may refer, without limitation, to an aliquot of substance such as a chemical or biological compound. Specifically, the sample may be or may comprise at least one biological specimen, such as one or more of: blood; blood serum; blood plasma; urine; saliva. Additionally or alternatively, the sample may be or may comprise a chemical substance or compound and/or a reagent. The sample may specifically be a liquid sample, such as an aliquot of a fluid substance of the chemical or biological compound. For example, the liquid sample may be or may comprise at least one pure liquid, such as a liquid substance and/or a solution containing one or more liquid substances, comprising the at least one chemical and/or the biological substance. As another example, the liquid sample may be or may comprise a liquid mixture, such as a suspension, and emulsion and/or a dispersion of one or more chemical and/or biological substances. However, other, in particular non-liquid samples, are also possible. Other sample types may be, for example, tissue or homogenized material.

Further, the robot comprises at least one artificial finger arranged and connected to the at least one end effector and configured for operating at least one input unit of the at least one test instrument. The term "artificial finger" as used herein is a broad term and is to be given its ordinary and customary meaning to a person of ordinary skill in the art and is not to be limited to a special or customized meaning. The term specifically may refer, without limitation, to a finger-like and/or pen-like structure and/or mechanism configured for imitating at least one function of a human finger. As an example, the artificial finger may be or may comprise at least one tip, such as a free end, with which at least one operation, such as one or more of pushing and wiping, may be performable and/or performed. Additionally or alternatively, the artificial finger, specifically the tip of the artificial finger, may be fully or partially made of an electrically conductive material, such as to imitate the electrically conductive characteristic of a human finger, e.g. to allow operating one or more touch screens and/or touch devices via the artificial finger.

In particular, the artificial finger is configured for operating at least one input unit of the test instrument, e.g. one or more of a touch screen and a keyboard.

The term "input unit" as used herein is a broad term and is to be given its ordinary and customary meaning to a person of ordinary skill in the art and is not to be limited to a special or customized meaning. The term specifically may refer, without limitation, to an arbitrary control pad and/or device of the test instrument via which the test instrument is operatable and/or operated. Specifically, the input unit of the test instrument may be or may comprise a terminal that translates external commands provided to the input unit, e.g. via gestures and/or movements of the artificial finger, into internal commands to be performed by the test instrument. The input unit may particularly be configured for receiving control information for performing at least one diagnostic measurement, such as a measurement comprising determining at least one diagnostic parameter, by the test instrument. As an example, the input unit may be or may comprise one or more of a keyboard and/or a touch screen or the like, via which information may be entered to control the test instrument, specifically information triggering a start and/or an end of a test procedure performed by the test instrument, and/or information on one or more settings for the test procedure, to be performed by the test instrument.

Further, the robot comprises at least one scanning device arranged and connected to the at least one end effector and configured for scanning at least one item of information of the at least one sample tube. The term "scanning device" as used herein is a broad term and is to be given its ordinary and customary meaning to a person of ordinary skill in the art and is not to be limited to a special or customized meaning. The term specifically may refer, without limitation, to a device for contactless data acquisition. In particular, the scanning device may be or may comprise a reader configured for contactlessly acquiring at least one item of information from an object and/or element.

As an example, the scanning device may be or may comprise an optical scanner configured for visually and contactlessly acquiring information from and/or of the at least one sample tube. The scanning device may be or may comprise at least one of a one-, two- or three-dimensional visual and/or optical scanner. In particular, the scanning device may be an image scanner, such as a barcode reader or a camera, and may be configured for recording and/or capturing spatially resolved information and converting the information into a digital image. For this purpose, the scanning device may comprise at least one camera chip, such as at least one CCD chip and/or at least one CMOS chip configured for recording images.

However, the process of scanning information of the at least one sample tube may depend on the type of identifier used for storing and/or providing the information of the at least one sample tube. Thus, the scanning device may be or may comprise the above-outlined optical scanning device configured for optically and/or visually acquiring information from the sample tube in case the identifier comprises an optical identifier, such as information stored on the sample tube in form of a code, e.g. a bar code and/or QR code, and/or a tag.

Alternatively, specifically in case the identifier comprises an electronic identifier, such as information stored on the sample in electronic form, e.g. as an RFID code, the scanning device may be configured for electronically reading the information, such as by being and/or comprising a frequency reader, e.g. a near field communication (NFC) scanner. The scanning device configured for electronically reading the information may for example be referred to an electronic scanner.

The at least one item of information of and/or about the at least one sample tube may specifically be stored in one or more scannable identifiers arranged on the sample tube. The term "identifier" as used herein is a broad term and is to be given its ordinary and customary meaning to a person of ordinary skill in the art and is not to be limited to a special or customized meaning. The term specifically may refer, without limitation, to an element or a combination of elements configured for storing one or more items of information identifying the sample tube and/or at least the sample, i.e. the content, of the sample tube, such as in a readable fashion, specifically in a machine-readable fashion, in particular in a fashion readable by the scanning device. Specifically, the at least one item of information stored in the identifier may be or may comprise at least one item of identification information. The identifier may comprise at least one of an optical identifier, an electronic identifier, a magnetic identifier or a mechanical identifier. As an example, the identifier, specifically the optical identifier, may be or may comprise at least one of a one- or two-dimensional code and/or a readable information tag, such as one or more of a barcode, a QR code or another type of code directly or indirectly attached to the sample tube, such as by being applied directly to the sample tube and/or by being attached to the sample tube via at least one label or tag.

The term "item of information on the sample tube" as used herein is a broad term and is to be given its ordinary and customary meaning to a person or ordinary skill in the art and is not to be limited to a special or customized meaning. The term specifically may refer without limitation to identification information, e.g. one or more numerical values and/or letters, which quantify at least one property, quality, feature or characteristic of the sample tube and/or at least the sample, i.e. the content, of the sample tube. In particular, the item of information may be or may comprise an array or a sequence of numbers and/or letters, unique for a specific sample tube and/or sample contained in the sample tube. As an example, the item of information on the sample tube may be as simple as the name of the person from which the sample was taken. Other configurations of the identifying information are possible. In particular, the item of information may be or may comprise numbers and/or letters conveying knowledge on the identity of the sample tube, such as information that is unique to the sample tube and/or the sample contained therein. The terms "item of information on the sample tube", "item of information of the sample tube" item of information about the sample tube" may be used interchangeably herein and may all refer to the same item of information.

As an example, the item of information, e.g. the scanned information, may be stored, at least temporarily, by the robot, such as on a database, e.g. on one or more internal databases and/or on a cloud. Thus, the robot may further comprise at least one storage device and/or database configured for storing at least the item of information, e.g. the scanned information, of the at least one sample tube.

The robot further comprises at least one e-paper display configured for reproducing the at least one scanned information. The term "e-paper display" as used herein as a broad term and is to be given its ordinary and customary meaning to a person of ordinary skill in the art and is not to be limited to a special or customized meaning. The term specifically may refer, without limitation, to a display device that mimics the appearance of ink on paper. In particular, the e-paper display may also be referred to as "electronic paper display", may make use of one or more technology selected from the group consisting of gyricon, electrophoretics, electrowetting, interferometry and plasmonics. As an example, the e-paper display may be configured for only needing electricity to set an image and/or picture to be displayed on the e-paper display, e.g. but not needing electricity to hold the image and/or picture on the e-paper display.

The term "reproducing" as used herein is a broad term and is to be given its ordinary and customary meaning to a person of ordinary skill in the art and is not to be limited to a special or customized meaning. The term specifically may refer, without limitation, to a process of displaying and/or showing previously obtained information. In particular, the e-paper display configured for reproducing the scanned information may refer to the e-paper display showing and/or displaying the scanned information, such as by displaying an image, e.g. a picture and/or replicate of the item of information. For example, the reproducing may be or may comprise showing a picture of the identifier, e.g. of the code and/or tag, as attached to and/or present on the sample tube. Additionally or alternatively, the reproducing may be or may comprise showing a replicate configured for providing the same item of information as the identifier, but in a different format.

Specifically, the reproduced information displayed by the display may be, but does not have to be, in the same format as the original identifier. In particular, in case the identifier attached and/or present on the sample tube is an optical identifier, i.e. visually scannable by the scanning device, then the reproduced information may be a visually scannable image of the optical identifier. Alternatively, in case the identifier attached and/or present on the sample tube is an electronic identifier only, then the reproduced information may be a visually scannable image illustrated on the e-paper display, the image containing and/or providing the same item of information as the original electronic identifier, but in a visually scannable format instead of in an electronic format.

The robot may further comprise at least one multifunctional transport component arranged and connected to the at least one end effector. The term multifunctional transport component as used herein is a broad term and is to be given its ordinary and customary meaning to a person of ordinary skill in the art and is not to be limited to a special or customized meaning. The term specifically may refer, without limitation, to an arbitrary effector of the robot, configured for performing a multitude of tasks. Particularly, the multifunctional transport component may be configured for picking and dropping one or more objects. As an example, the picking may comprise one or gripping and/or hooking while the dropping may comprise one of releasing and/or placing the one or more objects. For example, the multifunctional transport component may be configured for put forming at least one pick and place operation. The one or more objects may be selected from the group consisting of the test instrument; a tube rack; and a drawer of a refrigerator. As an example, the multifunctional transport component may be or may comprise one or more hooks, such as one or more hooks configured for hooking into at least one element of the objects. For example, the objects, specifically the test instrument, the tube rack and the drawer of a refrigerator may be carried by being hooked onto the one or more hooks of the multifunctional transport component.

In particular, the multifunctional transport component may comprise at least three functional elements. The at least three functional elements may specifically be configured for, by their interaction surfaces, picking one or more of the objects by at least one rotational movement and/or straight movement and for dropping the same objects by at least one reverse rotational and/or straight movement.

As an example, the multifunctional transport component may comprise at least one flat body, e.g. a body having a disk-like and/or panel-like shape, wherein the interaction surfaces of the at least three functional elements may be arranged on one or more narrow side surfaces of the flat body. For example, the interaction surfaces may be part of an outline-surface and/or of a cross sectional surface of the multifunctional transport component. Specifically, the interaction surfaces may be arranged on an outer surface of the flat body of the multi-functional transport component, specifically on the surface orthogonal to flat top and/or bottom surfaces of the flat body. In particular, the flat body may be or may comprise at least one bent and/or kinked, such as comprising at least one partial fold. Thus, as an example, the interaction surfaces, though being part of an outline-surface, may still be arranged at an angle with respect to each other. For example, the outer edges of the flat body may be folded and/or bent in a direction perpendicular to the flat, main surface of the flat body, e.g. similar to runners of a sled protruding from the flat seat area. Other shapes may be feasible.

The robot may further comprise at least one displacement unit configured for displacing one or more of the robot's components. In particular, the displacement unit may be configured for displacing the robotic arm, specifically by displacing its base. Additionally or alternatively, the displacement unit may be configured for displacing the e-paper display. As an example, the base of the robotic arm may be mounted to the displacement unit. For performing the displacement, the displacement unit may comprise at least one guiding rail, specifically along which the robot's components may be displaceable. Thus, as an example, one or both of the robot's base and e-paper display may be arranged and or mounted on the displacement unit such that they may be movable along the guiding rail.

The robot may further comprise at least one e-paper motion unit. The term "e-paper motion unit" as used herein is a broad term and is to be given its ordinary and customary meaning to a person of ordinary skill in the art and is not to be limited to a special or customized meaning. The term specifically may refer, without limitation, to a manipulator of the robot configured to perform movement. The e-paper motion unit may specifically be arranged between the base of the robotic arm and the e-paper display. The e-paper motion unit may be configured for moving the e-paper display, specifically within a radius starting from the base in the range of from 1 mm to 100 mm. In particular, the e-paper motion unit may be configured for moving the e-paper display in a radius starting from the base in the range of from 10 mm to 50 mm.

The tube gripper may further comprise a rotational movement unit configured for rotating the tube gripper. The term "rotational movement unit" as used herein is a broad term and is to be given its ordinary and customary meaning to a person of ordinary skill in the art and is not to be limited to a special or customized meaning. The term specifically may refer, without limitation, to an effector of the robot configured to perform at least one gripping and rotating movement. In particular, the rotational movement unit may be configured for screwing and/or unscrewing at least one cap from the at least one sample tube. Thus, the rotational movement unit may be configured to first grip the cap of the at least one sample tube and then rotate the cap of the at least one sample tube, thereby either screwing the cap onto the at least one sample tube or unscrewing the cap from the at least one sample tube.

The robot may further comprise at least one control unit configured for controlling and coordinating one or more function of the robot's components. The term "control unit" as used herein is a broad term and is to be given its ordinary and customary meaning to a person of ordinary skill in the art and is not to be limited to a special or customized meaning. The term specifically may refer, without limitation, to an arbitrary instrument designed to operate and/or drive at least one electrical device, e.g. by influencing the behavior of at least one electrical device such as of a robot. In particular, the control unit may be designed to operate and/or influence the robot's functions, i.e. by controlling and/or coordinating one or more of its component's functions. As an example, the control unit may be oh may comprise one or more integrated circuits, such as one or more application-specific integrated circuits (ASICs), and/or one or more data processing devices, such as one or more of computers, digital signal processors (DSP), field programmable gate arrays (FPGA) preferably one or more microcomputers and/or microcontrollers. Further, the evaluation unit may comprise one or more data storage devices. Further, the evaluation unit may comprise one or more interfaces, such as one or more wireless interfaces and/or one or more wire-bound interfaces. In particular, the control unit may be configured for controlling and/or coordinating one or more functions of the robotic arm, the tube gripper, the artificial finger, the scanning device, the e-paper display and optionally one or more of the multifunctional transport component, the displacement unit and the e-paper motion unit.

In a further aspect of the present invention, a method of automatically equipping and operating at least one test instrument is disclosed. The method comprises the following steps, which may be performed in the given order. It shall be noted, however, that a different order is also possible. Further, it is also possible to perform one or more of the method steps once or repeatedly. Further, it is possible to perform two or more of the method steps simultaneously or in a timely overlapping fashion. The method may comprise further method steps, which are not listed.

The method of automatically equipping and operating the at least one test instrument comprises the following steps:
a) providing at least one robot as described herein;
b) providing, e.g. on a trolley, at least one test instrument comprising at least one input unit, at least one tube receptacle and at least one scanner;
c) providing at least one sample tube containing at least one sample;
d) scanning, by the scanning device, the at least one information of the sample tube;
e) displaying, by the e-paper display, the at least one information of the sample tube to the scanner of the test instrument;
f) placing the at least one sample tube in the tube receptacle of the test instrument, by gripping, moving and releasing the sample tube by using the tube gripper and the robotic arm;
g) operating the test instrument by the artificial finger, such that the test instrument performs at least one test on the sample contained in the sample tube.

Specifically, the robot provided in step a) may be the robot as described above or as further described below. Thus, for definitions and embodiments of the method, reference is made to the definitions and embodiments as described in context of the robot, e.g. elsewhere herein.

The method may comprise the following step:
h) placing the at least one test instrument in a predefined testing position by using the robotic arm and the at least one multifunctional transport component, specifically its functional element configured for picking and dropping the test instrument.

Specifically, step h) may be performed before step d).

The method, before step g), may comprise the following step:
i) unscrewing, by the tube gripper, specifically by the tube gripper's rotational movement unit, at least one cap from the at least one sample tube.

Specifically, step i) may be performed before step f).

Step i) of the method may further comprise storing the at least one unscrewed cap in a predefined cap storing area. For example, the predefined cap storing area may be a designated area, specifically within a reachable radius around the robot, such as around the base of the robot, where the caps may at least temporarily be stored and/or placed.

The method may comprise the following step:
j) screwing, by the tube gripper, specifically by the tube gripper's rotational movement unit, at least one cap onto the at least one sample tube.

Specifically, step j) may be performed after step g).

As an example, step g) may further comprise inputting a key combination for a new test into the input unit of the test instrument, for example into a touch screen of the test instrument. Further, additionally or alternatively, step g) may comprise switching on a power of the test instrument by using the artificial finger. For example, the robot may by its artificial finger push onto a power button and/or activate a power lever for turning on the power of the test instrument.

Step c) may comprise providing a plurality of sample tubes in at least one tube rack and in step f) the at least one sample tube may be picked from the tube rack. The term "tube rack" as used herein is a broad term and is to be given its ordinary and customary meaning to a person of ordinary skill in the art and is not to be limited to a special or customized meaning. The term specifically may refer, without limitation, to an arbitrary holder configured for holding a plurality of sample tubes, specifically at least two sample tubes. The tube rack may be used in the field of medical and/or chemical laboratories to hold the sample tubes during transport, storage and/or processing, e.g. during processing of the sample contained in at least one of the sample tubes. As an example, the tube rack may at least partially comprise at least one metal material, e.g. iron. The sample tubes may be stackable within the tube rack in an upright position, such that an open end of the sample tube may be pointing upward, i.e. in a direction opposite the acting direction of the gravitational force. As an example, the tube rack may be considered a tube storing device and/or a tube storing area.

The method, after step g), may comprise the following step:
k) collecting the at least one sample tube from the tube receptacle of the test instrument and storing the at least one sample tube in a predefined sample tube storing area, specifically in the at least one tube rack, by gripping, moving and releasing the sample tube by using the tube gripper and the robotic arm.

The method, after step g), may comprise the following step:
l) retrieving the at least one test instrument from the predefined testing position and storing the at least one test instrument in a predefined test instrument storing area, e.g. on a trolley, by using the robotic arm and the at least one multifunctional transport component, specifically its functional element configured for picking and dropping the test instrument.

Specifically, step 1) may be performed after step k).

One or more of the method steps or even all or the method steps of the method of automatically equipping and operating at least one test instrument may be automatically performed. Specifically, at least steps d) to g) of the method of automatically equipping and operating at least one test instrument may be performed automatically by the robot as described herein. Additionally and optionally one or more of steps h), i), j), k) and l), of the method may further be performed automatically by the robot as described herein.

In a further aspect of the present invention, a computer program comprising instructions which, when the program is executed by the robot as described herein, cause the robot to perform at least steps d) to g), and optionally one or more of steps h), i), j), k) and l), of the method of automatically equipping and operating at least one test instrument is disclosed. Specifically, the robot is configured for performing at least steps d), e), f) and g) of the method of automatically equipping and operating at least one test instrument, when the computer program is executed by the robot. Optionally, in addition to at least steps d), e), f) and g), the robot is additionally configured for performing one or more of steps h), i), j), k) and l) of the method of automatically equipping and operating at least one test instrument, when the computer program is executed by the robot. For possible definitions and embodiments of the computer program, reference is made to the definitions and embodiments as described in context of one or more of the robot and the method, e.g. elsewhere herein.

Specifically, the computer program may be stored on a computer-readable storage medium. Thus, in a further aspect of the present invention, a computer-readable storage medium comprising instructions which, when the instructions are executed by the robot as described herein, cause the robot to perform at least steps d) to g), and optionally one or more of steps h), i), j), k) and l), of the method of automatically equipping and operating at least one test instrument, is disclosed. Specifically, the computer-readable storage medium may be a computer-readable data carrier, such as a data carrier having a data structure stored thereon, which, after loading into the robot, i.e. into the robot's computer or computer network, such as into a working memory or main memory of the robot, may cause the robot to execute the method of automatically equipping and operating at least one test instrument as disclosed herein, i.e. according to one or more of the embodiments disclosed herein.

As used herein, the terms "computer-readable data carrier" and "computer-readable storage medium" specifically may refer to non-transitory data storage means, such as a hardware storage medium having stored thereon computer-executable instructions. The computer-readable data carrier or storage medium specifically may be or may comprise a storage medium such as a random-access memory (RAM) and/or a read-only memory (ROM).

In a further aspect of the present invention, a test system for automatically performing at least one test procedure on at least one sample is disclosed. The test system comprises at least one robot as described herein. Specifically, the test system may comprise at least one robot according to one or more of the embodiments disclosed herein. Further, the test system comprises at least one test instrument comprising at least one input unit, at least one tube receptacle and at least one scanner. In addition, the test system comprises at least one refrigerator configured for at least temporarily storing and cooling the at least one sample tube arranged in at least one tube rack. Furthermore, the test system comprises at least one pipetting robot configured for transferring liquid into the at least one sample tube.

For possible definitions and embodiments of the test system, reference is made to the definitions and embodiments as described in context of the robot, e.g. elsewhere herein.

The term "test system" as used herein is a broad term and is to be given its ordinary and customary meaning to a person of ordinary skill in the art and is not to be limited to a special or customized meaning. The term specifically may refer, without limitation, to an arbitrary system configured for performing at least one test, e.g. a test of one or more functions of a test instrument, and/or at least one analysis, e.g. an analysis of a sample. As part of the test and/or analysis, the test instrument may be operated to run and/or execute a test procedure comprising analyzing at least one analyte in the sample and/or determining at least one parameter of the sample, e.g. a diagnostic parameter. As an example, the test system may be configured for, e.g. subsequently and/or simultaneously, check the functioning of the at least one, specifically of more than one, test instrument. Specifically, the test system may be used for performing at least one test procedure, e.g. as will be outlined is further detail below.

The test system, as an example, may comprise a plurality of sample tubes. Specifically, the test system may comprise the plurality of sample tubes in the at least one tube rack. For example, the plurality of sample tubes of the test system may be stacked in the tube rack, specifically in an initial state and/or set-up of the test system, e.g. before the test system is used for performing at least one test procedure.

As an example, the test system may comprise further objects and/or devices supporting the performing of the at least one test procedure, such as trolleys and/or desks for storing, e.g. temporarily, one or more of the test system's components, such as the at least one test instrument, and/or one or more caps of the test tubes and/or one or more tube racks. Such desks may for example even comprise one or more mounting frames into which the at least one test instrument may be positionable.

In a further aspect of the present invention, a method of automatically performing at least one test procedure is disclosed. The method comprises the following steps, which may be performed in the given order. It shall be noted, however, that a different order is also possible. Further, it is also possible to perform one or more of the method steps once or repeatedly. Further, it is possible to perform two or more of the method steps simultaneously or in a timely overlapping fashion. The method may comprise further method steps, which are not listed.

The method of automatically performing at least one test procedure comprises the following steps:
A) providing a test system as described herein;
B) retrieving, by the at least one robot, the at least one tube rack holding the at least one sample tube from the refrigerator by using the robotic arm and the at least one multi-functional transport component, specifically its functional element configured for picking and dropping the tube rack;
C) placing the at least one tube rack in the pipetting robot by using the robotic arm and the at least one multifunctional transport component, specifically its functional element configured for picking and dropping the tube rack;
D) retrieving the at least one tube rack from the pipetting robot by using the robotic arm and the at least one multifunctional transport component, specifically its functional element configured for picking and dropping the tube rack, and storing the at least one tube rack in a predefined tube rack storing area;
E) performing at least steps d) to g), and optionally one or more of steps h), i), j), k) and l), of the method of automatically equipping and operating at least one test instrument according to any one of the preceding method claims, wherein in step f), the at least one sample tube is picked from the tube rack, and optionally in step k) the predefined sample tube storing area is the tube rack.

Specifically, the test system provided in step A) may be the test system as described above or as further described below. Thus, for definitions and embodiments of the method, reference is made to the definitions and embodiments as described in context of the test system and the robot comprised by the test system, e.g. elsewhere herein.

Step B) may further comprise pulling out refrigerator drawers by using the robotic arm and the at least one multi-functional transport component. Specifically, in step B), at least one refrigerator drawer may be pulled out by using the functional element of the multi-functional transport component, the functional element being configured for picking and dropping the drawer of the refrigerator. Further, step B) may comprise, after the retrieving of the at least one tube rack holding the at least one sample tube from the refrigerator, pushing back in the refrigerator drawers by using the robotic arm and the at least one multifunctional transport component. Specifically, in step B), the at least one refrigerator drawer may be pushed back in, i.e. within the refrigerator, by using the multi-functional transport component's functional element configured for picking and dropping the drawer of the refrigerator.

Step D) may for example only be performed, after liquid was transferred into the at least one sample tube by the pipetting robot. The pipetting robot may for example be or may comprise an automated pipetting system.

The test procedure may specifically be one or more of a quality control test, e.g. performed in a manufacturing process of test instruments, and a diagnostic test, e.g. performed in a laboratory. Thus, as an example, the method of automatically performing at least one test procedure may further comprise at least one step comprising comparing at least one response and/or result from the test instrument with at least one expected response and/or expected result. Such a quality control test may be or may comprise a simple response check, i.e. by comparing whether the test instrument correctly responds to the robot's instruction, e.g. by starting to run and/or execute the test procedure. Additionally or alternatively, the quality control check may be or may comprise an evaluation of whether the test instrument performed the test procedure correctly, e.g. by comparing the results of the analysis of the sample with an expected result. For this purpose, at least one of the samples in the sample tubes may be a test sample, i.e. a sample for which a result of the test procedure performed by the test instrument is known and/or has been pre-determined.

As an example, the method of automatically performing at least one test procedure may comprise the following steps. Specifically, step A) may comprise moving a plurality of test instruments from a trolley to a desk of the test system, e.g. into at least one mounting frame arranged on the desk. Further, step B) of the method may comprise moving the tube rack from the refrigerator to the desk, wherein the refrigerator may comprise at least one automatic door, which may automatically open and close. Then, still as part of step B), at least one of the drawers of the refrigerator, on which the at least one tube rack may be stored, may be pulled out by using the multifunctional transport component. Subsequently and further by using the multifunctional transport component, the tube rack may be moved from the refrigerator to the desk. In a further subsequent motion, e.g. still as part of step B), the at least one drawer of the refrigerator may be pushed back into the refrigerator, e.g. by further using the multifunctional transport component. Afterwards, i.e. still in step B), the refrigerator door may close automatically. Subsequently, the method may comprise a step, specifically before performing step C), in which the tube gripper may be used to unscrew and store aside the at least one cap of at least one sample tube, wherein the caps may be stored in a predefined cap storage area. Then, i.e. in step C), the robot, specifically by using the multi-functional transport component and the robotic arm may move the tube rack from the desk to the pipetting robot, where liquid may be transferred into the sample tube. Further, subsequently, i.e. as part of step E) of the method and as part of step d) of the method of automatically equipping and operating at least one test instrument, the robot, specifically by using the scanning device, may scan the identifier of the at least one sample tube, e.g. a barcode attached to an outer surface of the sample tube, specifically while the sample tube may be positioned within the tube rack. The item of information of the sample tube scanned by the scanning device may be stored in the robot's data base, i.e. still as part of step d) of the method of automatically equipping and operating at least one test instrument, specifically in the data base of the processor of the robot. Subsequently, i.e. as part of step D) of the method of automatically performing at least one test procedure, the tube rack may be moved, e.g. by using the multifunctional transport component and the robotic arm, from the pipetting robot to the desk where then the at least one cap of the at least one sample tube may be screwed onto the sample tube, thereby once again closing the sample tube. Subsequently, i.e. as part of step E) of the method of automatically performing at least one test procedure, the at least one sample tube may be moved, e.g. by using the multifunctional transport component and the robotic arm, from the desk to the at least one test instrument. As an example, an exact position of the test instrument may be predetermined and/or preset, e.g. by using one or more mounting frames and/or baskets, into which the test instrument may be positionable. As an example, the position of the test instrument may be hardware coded by matching the carrying basket with a frame mounted to the surface of the desk and/or table. The frame and/or basket may also be configured to provide electrical contacts for powering the test instrument. Thus, as an example, the robot may have access to a position information of the test instrument allowing for a precise positioning of the at least one sample tube into the sample receptacle of the test instrument. Subsequently, e.g. as part of step E) of the method of automatically performing at least one test procedure and as part of step g) of the method of automatically equipping and operating at least one test instrument, the artificial finger may be used for turning on the power to the test instrument and may further be used for entering a key combination into the input unit, indicating to the test instrument that a new test is to be performed, and may further start the testing procedure, e.g. one or more measurements and/or analyses, performed by the test instrument. The item of information on the respective sample tube provided to the test instrument, as stored in the data base, may simultaneously and/or subsequently be displayed on the e-paper display and scanned by the test instrument's scanner. Once the test instrument has performed the at least one test procedure, e.g. as part of step E) of the method of automatically performing at least one test procedure and as part of step k) of the method of automatically equipping and operating at least one test instrument, the at least one sample tube may be removed from the sample receptacle of the test instrument by using the tube gripper and the robotic arm of the robot. Subsequently, e.g. as part of step E) of the method of automatically performing at least one test procedure and as part of step 1) of the method of automatically equipping and operating at least one test instrument, the at least one test instrument may be returned to the trolley.

The devices, methods, computer programs and systems as disclosed herein may provide a large number of advantages over known devices, methods computer programs and systems. Thus, in particular, the present invention may provide for a reliable and accurate handling of samples as well as automated, fast, reliable and accurate performance of laboratory tasks and test procedures. Specifically, the reliability, accuracy and speed of one or more of handling samples, performing laboratory tasks and/or test procedures may be improved by an interaction of the robot's components.

Further, the present invention may simplify the performing of a quality control test in a manufacturing process of the test instruments. Specifically, the test system comprising the robot may be able to perform such a quality control test in a fast and reliable fashion. In particular, the present invention may allow for an automatic quality control in the process of manufacturing test instruments configured for performing medical and/or chemical test procedures and may thus increase an output and/or manufacturing rate of such test instruments.

Summarizing and without excluding further possible embodiments, the following embodiments may be envisaged:
Embodiment 1: A robot for automatically equipping and operating at least one test instrument, comprising:
   - at least one robotic arm comprising at least one base and at least one end effector, wherein the robotic arm is configured for moving the end effector from at least one first position to at least one second position;
   - at least one tube gripper arranged and connected to the at least one end effector and configured for gripping and releasing at least one sample tube;
   - at least one artificial finger arranged and connected to the at least one end effector and configured for operating at least one input unit of the at least one test instrument;
   - at least one scanning device arranged and connected to the at least one end effector and configured for scanning at least one item of information, specifically in form of a code and/or tag, of the at least one sample tube;
   - at least one e-paper display configured for reproducing the at least one scanned information.
Embodiment 2: The robot according to the preceding embodiment, wherein the robot further comprises at least one multifunctional transport component arranged and connected to the at least one end effector and configured for picking, specifically gripping and/or hooking, and dropping, specifically releasing and/or placing, one or more objects selected from the group consisting of: the test instrument; a tube rack; a drawer of a refrigerator.
Embodiment 3: The robot according to the preceding embodiment, wherein the multi-functional transport component comprises at least three functional elements configured for, by their interaction surfaces, picking one or more of the objects by at least one rotational movement and/or straight movement and for dropping the object by at least one reverse rotational and/or straight movement.
Embodiment 4: The robot according to the preceding embodiment, wherein the multi-functional transport component comprises at least one flat body, wherein the interaction surfaces of the at least three functional elements are arranged on one or more narrow side surfaces of the flat body.
Embodiment 5: The robot according to any one of the preceding embodiments, further comprising at least one displacement unit configured for displacing one or more of the robot's components, such as one or more of the robotic arm, specifically by its base, and the e-paper display.
Embodiment 6: The robot according to the preceding embodiment, wherein the base of the robotic arm is mounted to the displacement unit.
Embodiment 7: The robot according to any one of the two preceding embodiments, wherein the displacement unit comprises at least one guiding rail, specifically along which the robot's components are displaceable.
Embodiment 8: The robot according to any one of the preceding embodiments, further comprising at least one e-paper motion unit arranged between the base of the robotic arm and the e-paper display and configured for moving the e-paper display within a radius starting from the base in the range of from 1mm to 100mm, specifically in the range of from 10mm to 50mm.
Embodiment 9: The robot according to any one of the preceding embodiments, wherein the tube gripper further comprises a rotational movement unit configured for rotating the tube gripper, i.e. for screwing or unscrewing at least one cap from the at least one sample tube.
Embodiment 10: The robot according to any one of the preceding embodiments, further comprising at least one control unit configured for controlling and coordinating one or more function of the robot's components, specifically the robotic arm, the tube gripper, the artificial finger, the scanning device, the e-paper display and optionally one or more of the multifunctional transport component, the displacement unit and the e-paper motion unit.
Embodiment 11: A method of automatically equipping and operating at least one test instrument, the method comprising:
   a) providing at least one robot according to any one of the preceding embodiments;
   b) providing, e.g. on a trolley, at least one test instrument comprising at least one input unit, at least one tube receptacle and at least one scanner;
   c) providing at least one sample tube containing at least one sample;
   d) scanning, by the scanning device, the at least one information of the sample tube;
   e) displaying, by the e-paper display, the at least one information of the sample tube to the scanner of the test instrument;
   f) placing the at least one sample tube in the tube receptacle of the test instrument, by gripping, moving and releasing the sample tube by using the tube gripper and the robotic arm;
   g) operating the test instrument by the artificial finger, such that the test instrument performs at least one test on the sample contained in the sample tube.
Embodiment 12: The method according to the preceding embodiment, wherein the method further comprises, specifically before step d),
   h) placing the at least one test instrument in a predefined testing position by using the robotic arm and the at least one multifunctional transport component, specifically its functional element configured for picking and dropping the test instrument.
Embodiment 13: The method according to any one of the preceding method embodiments, wherein the method further comprises, before step g), specifically before step f),
   i) unscrewing, by the tube gripper, specifically by the tube gripper's rotational movement unit, at least one cap from the at least one sample tube.
Embodiment 14: The method according to the preceding embodiment, wherein step i) further comprises storing the at least one unscrewed cap in a predefined cap storing area.
Embodiment 15: The method according to any one of the preceding method embodiments, wherein the method further comprises, specifically after step g),
   j) screwing, by the tube gripper, specifically by the tube gripper's rotational movement unit, at least one cap onto the at least one sample tube.
Embodiment 16: The method according to any one of the preceding method embodiments, wherein step g) comprises inputting a key combination for a new test into the input unit, into a touch screen, of the test instrument.
Embodiment 17: The method according to any one of the preceding method embodiments, wherein step g) further comprises switching on a power of the test instrument by using the artificial finger.
Embodiment 18: The method according to any one of the preceding method embodiments, wherein step c) comprises providing a plurality of sample tubes in at least one tube rack and wherein in step f) the at least one sample tube is picked from the tube rack.
Embodiment 19: The method according to any one of the preceding method embodiments, wherein the method further comprises, after step g),
   k) collecting the at least one sample tube from the tube receptacle of the test instrument and storing the at least one sample tube in a predefined sample tube storing area, specifically in the at least one tube rack, by gripping, moving and releasing the sample tube by using the tube gripper and the robotic arm.
Embodiment 20: The method according to any one of the preceding method embodiments, wherein the method further comprises, after step g), specifically after step k),
   l) retrieving the at least one test instrument from the predefined testing position and storing the at least one test instrument in a predefined test instrument storing area, e.g. on a trolley, by using the robotic arm and the at least one multifunctional transport component, specifically its functional element configured for picking and dropping the test instrument.
Embodiment 21: The method according to anyone of the preceding method embodiments, wherein at least steps d) to g), and optionally one or more of steps h), i), j), k) and l), of the method are performed automatically by the robot.
Embodiment 22: A computer program comprising instructions which, when the program is executed by the robot according to any one of the preceding embodiments referring to a robot, cause the robot to perform at least steps d) to g), and optionally one or more of steps h), i), j), k) and l), of the method according to any one of the preceding method embodiments.
Embodiment 23: A computer-readable storage medium comprising instructions which, when the instructions are executed by the robot according to any one of the preceding embodiments referring to a robot, cause the robot to perform at least steps d) to g), and optionally one or more of steps h), i), j), k) and l), of the method according to any one of the preceding method embodiments.
Embodiment 24: A test system for automatically performing at least one test procedure on at least one sample, the test system comprising:
   - at least one robot according to any one of the preceding embodiments referring to a robot;
   - at least one test instrument comprising at least one input unit, at least one tube receptacle and at least one scanner;
   - at least one refrigerator configured for at least temporarily storing and cooling the at least one sample tube arranged in at least one tube rack;
   - at least one pipetting robot configured for transferring liquid into the at least one sample tube.
Embodiment 25: The test system according to any one of the preceding embodiments referring to a test system, wherein the test system comprises a plurality of sample tubes in the at least one tube rack.
Embodiment 26: A method of automatically performing at least one test procedure, comprising
   A) providing a test system according to any one of the preceding embodiments referring to a test system;
   B) retrieving, by the at least one robot, the at least one tube rack holding the at least one sample tube from the refrigerator by using the robotic arm and the at least one multi-functional transport component, specifically its functional element configured for picking and dropping the tube rack;
   C) placing the at least one tube rack in the pipetting robot by using the robotic arm and the at least one multifunctional transport component, specifically its functional element configured for picking and dropping the tube rack;
   D) retrieving the at least one tube rack from the pipetting robot by using the robotic arm and the at least one multifunctional transport component, specifically its functional element configured for picking and dropping the tube rack, and storing the at least one tube rack in a predefined tube rack storing area;
   E) performing at least steps d) to g), and optionally one or more of steps h), i), j), k) and l), of the method of automatically equipping and operating at least one test instrument according to any one of the preceding method embodiments, wherein in step f), the at least one sample tube is picked from the tube rack, and optionally in step k) the predefined sample tube storing area is the tube rack.
Embodiment 27: The method according to the preceding embodiment, wherein step B) further comprises pulling out refrigerator drawers by using the robotic arm and the at least one multifunctional transport component, specifically its functional element configured for picking and dropping the drawer of the refrigerator and, after the retrieving of the at least one tube rack holding the at least one sample tube from the refrigerator, pushing back in the refrigerator drawers by using the robotic arm and the at least one multifunctional transport component, specifically its functional element configured for picking and dropping the drawer of the refrigerator.
Embodiment 28: The method according to any one of the two preceding embodiments, wherein the test procedure is one or more of a quality control test performed in a manufacturing process of test instruments and a diagnostic test performed in a laboratory.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
- Figure 1: shows a perspective view of an embodiment of a test system comprising an embodiment of a robot;
- Figure 2: shows a perspective view of part of an embodiment of a test system comprising an embodiment of a robot;
- Figure 3: shows an embodiment of a robot in a perspective view in a test system;
- Figures 4 a and 4b: show different embodiments of a multifunctional transport component in perspective views;
- Figures 5a and 5b: show different flow charts of a method of automatically equipping and operating at least one test instrument; and
- Figure 6: shows a flow chart of a method of automatically performing at least one test procedure.

### Detailed description of the embodiments

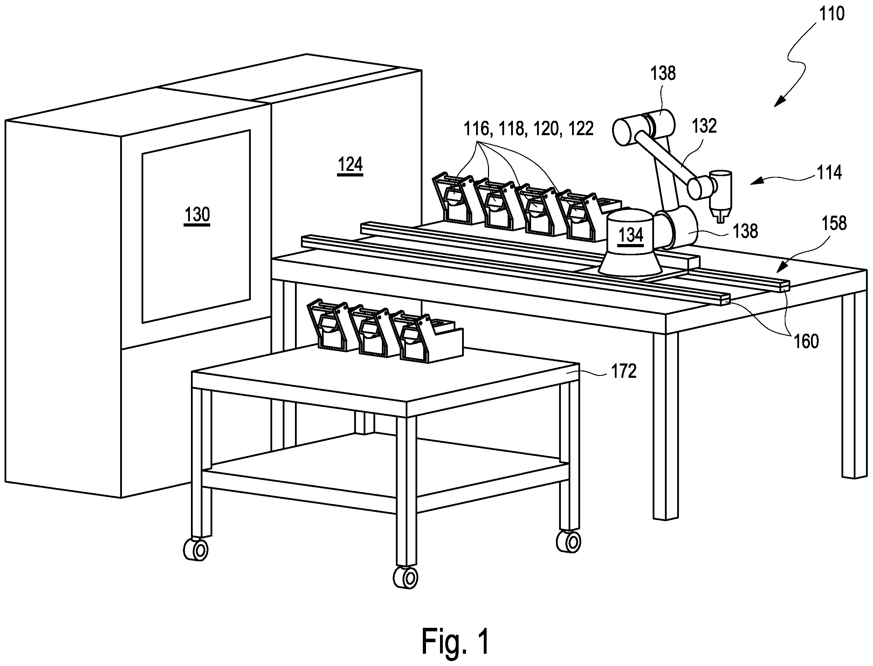

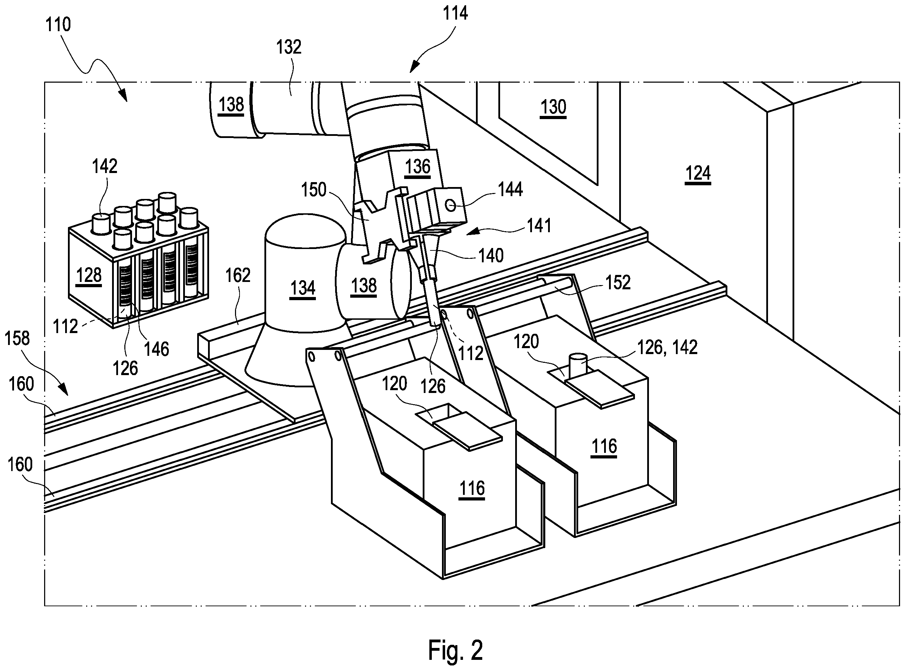

In Figure 1 an embodiment of a test system 110 configured for automatically performing at least one test procedure on at least one sample 112 is shown in a perspective view and in Figure 2, a perspective view of part of an embodiment of a test system 110 comprising an embodiment of a robot 114 is illustrated.

The test system 110 comprises at least one robot 114 configured for automatically equipping and operating at least one test instrument 116. Further, the test system 110 comprises the at least one test instrument 116 comprising at least one input unit 118, at least one tube receptacle 120 and at least one scanner 122. Further, the test system 110 comprises at least one refrigerator 124 configured for at least temporarily storing and cooling at least one sample tube 126, comprising the at least one sample and arranged in at least one tube rack 128. Optionally, the test system 110 may comprise a plurality of sample tubes 126 arranged in the at least one tube rack 128. Further, the test system 110 comprises at least one pipetting robot 130 configured for transferring liquid into the at least one sample tube 126.

As an example, and as exemplarily illustrated in Figure 2, the test system 110 may be configured for automatically performing the at least one test procedure on a plurality of samples 112, wherein each of the sample tubes 126 may comprise at least one of the samples 112.

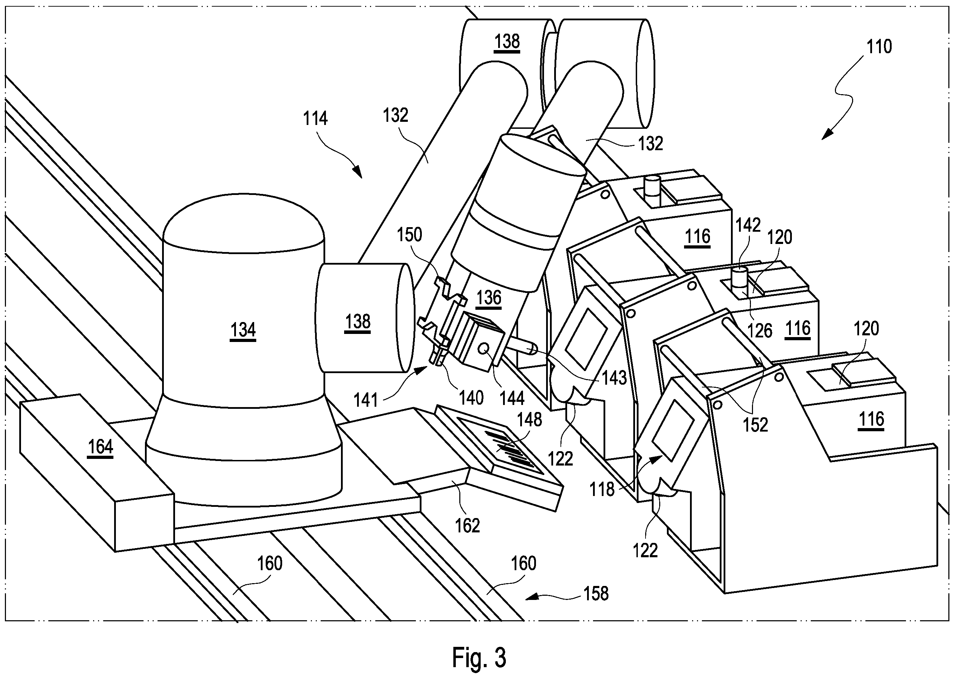

In Figure 3, an embodiment of the robot 114 is illustrated in a perspective view. The robot 114, specifically the robot comprised by the test system 110, is configured for automatically equipping and operating the at least one test instrument 116 and comprises at least one robotic arm 132. The robotic arm 132 comprises at least one base 134 and at least one end effector 136 and is configured for moving the end effector 136 from at least one first position to at least one second position. Specifically, the robotic arm 132 may be configured for moving the end effector 136 in up to six degrees of freedom, within a predefined reaching range of the robotic arm 132, the reaching range depending on one or more of a length of the robotic arm 132 and a movement range of one or more of the arm's joints 138.

Further, the robot 114 comprises at least one tube gripper 140 arranged and connected to the end effector 136. The tube gripper 140 is configured for gripping and releasing the at least one sample tube 126. As an example, the tube gripper 140 may comprise a rotational movement unit 141 configured for rotating the tube gripper 140. Specifically, the rotational movement unit 141 may specifically be configured for rotating the tube gripper 140 such as to screw or unscrew at least one cap 142 from the at least one sample tube 126.

In addition, the robot 114 comprises at least one artificial finger 143 arranged and connected to the at least one end effector 136 and configured for operating the at least one input unit 118 of the at least one test instrument 116.

Furthermore, the robot 114 comprises at least one scanning device 144 arranged and connected to the at least one end effector 136. The scanning device 144 is configured for scanning at least one item of information of the at least one sample tube 126. The item of information for example being provided by an identifier 146 arranged in and/or on the sample tube 126. The identifier 146 may for example be attached to an outer surface of the sample tube 126, as exemplarily illustrated in Figure 2. Further, the robot 114 comprises at least one e-paper display 148 configured for reproducing the at least one scanned item of information, i.e. on the sample tube 126. Specifically, the e-paper display 148 may be configured for reproducing and presenting the at least one scanned item of information to the scanner 122 of the test instrument 116.

The robot 114 may further comprise at least one multifunctional transport component 150 arranged and connected to the at least one end effector 136. The multifunctional transport component 150 may be configured for picking and dropping one or more objects selected from the group consisting of the test instrument 116, the tube rack 128 and a drawer of the refrigerator 124. Specifically, the picking performed by the multifunctional transport component150 may be or may comprise one or more of gripping and/or hooking one or more of the objects, i.e. in a pick-up area and/or from a starting position, while the dropping performed by the multifunctional transport component 150 may be or may comprise one or more of releasing and/or placing one or more of the objects, i.e. in a drop-off area and/or in a target position. Thus, as an example, the multifunctional transport component may be configured for mechanically interacting with the test instrument, such as by hooking into at least one handle 152 or handle bar of the test instrument 116, such that a subsequent movement of the robotic arm 132 moving the end effector 136 results in the test instrument 116 performing the same movement. As an example, the handle 152 may be part of a basked within which the test instrument 116 may be positioned.

The multifunctional transport component 150 may comprise at least three functional elements configured for, by their interaction surfaces, picking one or more of the objects by at least one rotational movement and/or straight movement and for dropping the object by at least one reverse rotational and/or straight movement, i.e. by reverse performing the initial rotation and/or lateral movement. As an example, the multifunctional transport component 150 may comprise at least one flat body, such as a bent and/or kinked flat body, such as like a bent sheet metal part, with the interaction surface of the functional elements being arranged on one or more narrow side surfaces of the flat body.

The robot 114 may comprise at least one displacement unit 158 configured for displacing one or more of the robot's components. Specifically, the displacement unit 158 may be configured for displacing one or both of the robotic arm 132, specifically by its base 134, and the e-paper display 148. As an example, the base 134 of the robotic arm 132 may be mounted to the displacement unit 158. Specifically and as exemplarily illustrated in Figure 2, the displacement unit 158 may comprise one or more guiding rails 160 along which the robot's components may be displaceable.

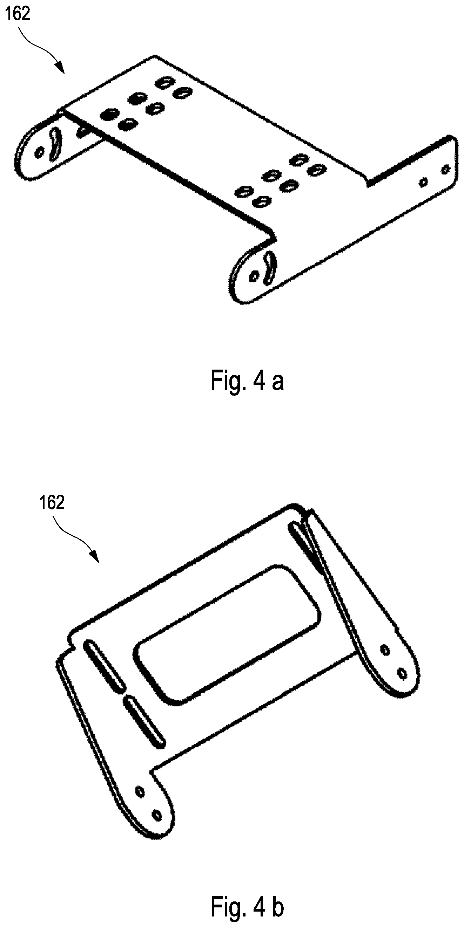

Further, the robot 114 may comprise at least one e-paper motion unit 162 configured for moving the e-paper display. Specifically, the e-paper motion unit 162 may be arranged between the base 134 and the e-paper display 148. The e-paper motion unit 162 may, for example, be configured for moving the e-paper display 148 within a radius in the range of from 1 mm to 100 mm, specifically in the range of from 10 mm to 50 mm, starting from the base 134. An embodiment of the e-paper motion unit 162 is illustrated in Figures 4a and 4b. As an example, the part of the e-paper motion unit 162 that is illustrated in Figure 4a may be configured to, in combination with the part of the e-paper motion unit 162 illustrated in Figure 4b, form a whole e-paper motion unit 162. Thus, the parts of the e-paper motion unit 162 shown in Figures 4a and 4b may be configured for interacting, e.g. by being attached at their rounded surfaces, to form one e-paper motion unit 162.

The robot 114 may further comprise at least one control unit 164 configured for controlling and coordinating one or more function of the robot's components. Specifically, the control unit 164 may be configured for controlling and coordinating one or more function of the robotic arm 132, the tube gripper 140, the artificial finger 143, the scanning device 144, the e-paper display 148 and optionally one or more of the multifunctional transport component 150, the displacement unit 158 and the e-paper motion unit 162.

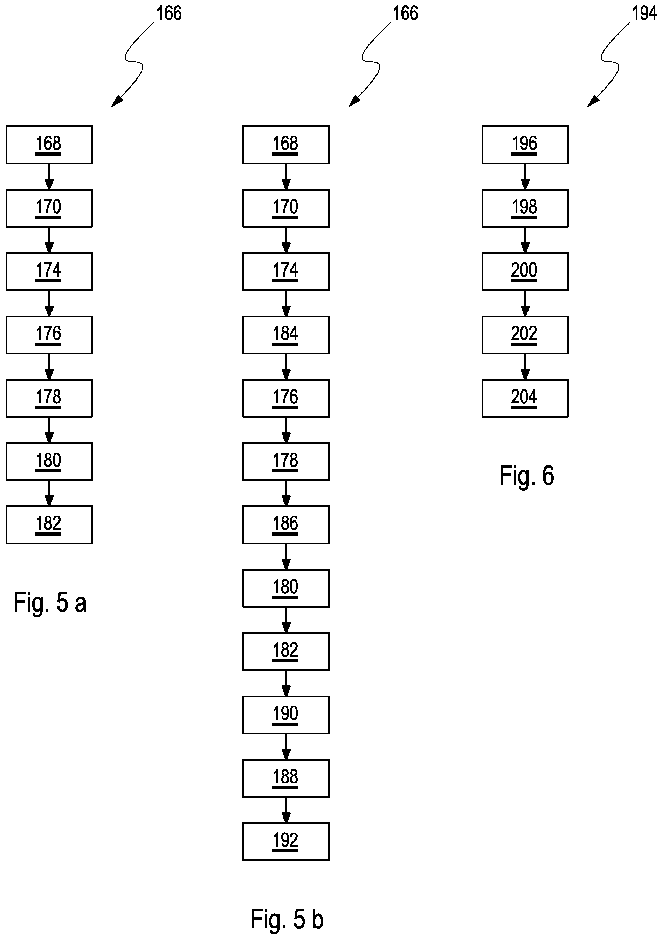

In Figures 5a and 5b, flow charts of different embodiments of a method 166 of automatically equipping and operating at least one test instrument 116 are illustrated. The method 166 comprises the following steps, which may be performed in the given order. Alternatively, however, a different order is also possible. Further, it is possible to perform one or more of the method steps simultaneously or in a timely overlapping fashion. The method 166 comprises the following steps, but may also comprise further method steps, which are not listed:
a) (denoted by reference number 168) providing at least one robot 114 as described herein;
b) (denoted by reference number 170) providing, e.g. on a trolley 172, at least one test instrument 116 comprising at least one input unit 118, at least one tube receptacle 120 and at least one scanner 122;
c) (denoted by reference number 174) providing at least one sample tube 126 containing the at least one sample (112);
d) (denoted by reference number 176) scanning, by the scanning device 144, the at least one information of the sample tube 126;
e) (denoted by reference number 178) displaying, by the e-paper display 148, the at least one information of the sample tube 126 to the scanner 122 of the test instrument 116;
f) (denoted by reference number 180) placing the at least one sample tube 126 in the tube receptacle 120 of the test instrument 116, by gripping, moving and releasing the sample tube 126 by using the tube gripper 140 and the robotic arm 132;
g) (denoted by reference number 182) operating the test instrument 116 by the artificial finger 143, such that the test instrument 116 performs at least one test on the sample 112 contained in the sample tube 126.

Step c) may specifically comprise providing a plurality of sample tubes 126 in the at least one tube rack 128 and wherein in step f) the at least one sample tube 126 may be picked from the tube rack 128. Specifically, in step f), the tube gripper 140 may first grip the sample tube 126, then the tube gripper 140 and in turn also the sample tube 126 may be moved from the pick-up location, such as from the tube rack 128, towards a dropping location, i.e. towards the tube receptacle 120, by using the robotic arm 132, specifically by moving the robotic arm 132, and then the tube gripper 140 may release the sample tube 126, such as into the tube receptacle 120. For example, the sample tube 126 may drop into the tube receptacle 120 due to the gravitational force. Alternatively, the tube gripper 140 may be configured for releasing the sample tube 126 only when the sample tube 126 has been moved towards and within the tube receptacle 120 by the robotic arm 132, e.g. once the sample tube 126 is positioned within the tube receptacle 120.

The method 166 may further comprise, specifically before step d), the following step:
h) (denoted by reference number 184) placing the at least one test instrument 116 in a predefined testing position by using the robotic arm 132 and the at least one multifunctional transport component 150, specifically its functional element configured for picking and dropping the test instrument 116.

The method 166 may further comprise, before step g), specifically before step f), the following step:
i) (denoted by reference number 186) unscrewing, by the tube gripper 140, specifically by the tube gripper's rotational movement unit 141, the at least one cap 142 from the at least one sample tube 126.

As an example, step i) may further comprise storing the at least one unscrewed cap 142 in a predefined cap storing area.

The method 166 may further comprise, after step g), the following step:
j) (denoted by reference number 188) screwing, by the tube gripper 140, specifically by the tube gripper's rotational movement unit 141, the at least one cap 142 onto the at least one sample tube 126.

Specifically, step g) may comprise inputting a key combination for a new test into the input unit 118 of the test instrument 116. Further, additionally or alternatively, step g) may comprise switching on a power of the test instrument 116 by using the artificial finger 143. For example, the robot 114 may by using its artificial finger 143 push a power button and/or activate a power lever for turning on the electric power for powering the test instrument 116.

The method 166 may further comprise, after step g), the following step:
k) (denoted by reference number 190) collecting the at least one sample tube 126 from the tube receptacle 120 of the test instrument 116 and storing the at least one sample tube 126 in a predefined sample tube storing area, specifically in the at least one tube rack 128, by gripping, moving and releasing the sample tube 126 by using the tube gripper 140 and the robotic arm 132.

Specifically, in step k), the movement of step f) may be performed in reverse.

The method 166 may further comprise, after step g), specifically after step k), the following step:
l) (denoted by reference number 192) retrieving the at least one test instrument 116 from the predefined testing position and storing the at least one test instrument 116 in a predefined test instrument storing area, e.g. on the trolley 172, by using the robotic arm 132 and the at least one multifunctional transport component 150, specifically its functional element configured for picking and dropping the test instrument 116.

As an example, step j) may be performed after performing step k) or even after performing step 1).

In Figure 6, a flow chart of a method 194 of automatically performing at least one test procedure is illustrated. The method 194 comprises the following steps, which may be performed in the given order. Alternatively, however, a different order is also possible. Further, it is possible to perform one or more of the method steps simultaneously or in a timely overlapping fashion. The method 194 comprises the following steps, but may also comprise further method steps, which are not listed:
A) (denoted by reference number 196) providing a test system 110 as described herein;
B) (denoted by reference number 198) retrieving, by the at least one robot 114, the at least one tube rack 128 holding the at least one sample tube 126 from the refrigerator 124 by using the robotic arm 132 and the at least one multifunctional transport component 150, specifically its functional element configured for picking and dropping the tube rack 128;
C) (denoted by reference number 200) placing the at least one tube rack 128 in the pipetting robot 130 by using the robotic arm 132 and the at least one multifunctional transport component 150, specifically its functional element configured for picking and dropping the tube rack 128;
D) (denoted by reference number 202) retrieving the at least one tube rack 128 from the pipetting robot 130 by using the robotic arm 132 and the at least one multifunctional transport component 150, specifically its functional element configured for picking and dropping the tube rack 128, and storing the at least one tube rack 128 in a predefined tube rack storing area;
E) (denoted by reference number 204) performing at least steps d) to g), and optionally one or more of steps h), i), j), k) and l), of the method 166 of automatically equipping and operating at least one test instrument 116 as described herein, wherein in step f), the at least one sample tube 126 is picked from the tube rack 128, and optionally in step k) the predefined sample tube 126 storing area is the tube rack 128.

Step B) may further comprise pulling out refrigerator drawers by using the robotic arm 132 and the at least one multi-functional transport component 150. Further, step B) may comprise, after the retrieving of the at least one tube rack 128 holding the at least one sample tube 126 from the refrigerator 124, pushing back in the refrigerator drawers by using the robotic arm 132 and the at least one multifunctional transport component 150. Specifically, step D) may only be performed, after the pipetting robot 130 has transferred liquid into the at least one sample tube 126.

As an example, the method 194, specifically step A) of the method 194, may comprise moving a plurality of test instruments 116 from a trolley 172 to a desk of the test system 110, e.g. into at least one mounting frame arranged on the desk. Further, step B) of the method 194 may comprise moving the tube rack 128 from the refrigerator 124 to the desk, wherein the refrigerator 124 may comprise at least one automatic door, which may automatically open and close. Then, still as part of step B), at least one of the drawers of the refrigerator 124, on which the at least one tube rack 128 may be stored, may be pulled out by using the multifunctional transport component 150. Subsequently and further by using the multifunctional transport component 150, the tube rack 128 may be moved from the refrigerator 124 to the desk. In a further subsequent motion, e.g. still as part of step B), the at least one drawer of the refrigerator 124 may be pushed back into the refrigerator 124, e.g. by further using the multifunctional transport component 150. Afterwards, i.e. still in step B), the refrigerator door may close automatically. Subsequently, the method 194 may comprise a step, specifically before performing step C), in which the tube gripper 140 may be used to unscrew and store aside the at least one cap of at least one sample tube 126, wherein the caps may be stored in a predefined cap storage area. Then, i.e. in step C), the robot 114, specifically by using the multifunctional transport component 150 and the robotic arm 132 may move the tube rack 128 from the desk to the pipetting robot, where liquid may be transferred into the sample tube 126. Further, subsequently, i.e. as part of step E) of the method 194 and as part of step d) of the method 166, the robot 114, specifically by using the scanning device 144, may scan the identifier 146 of the at least one sample tube 126, e.g. a barcode attached to an outer surface of the sample tube 126, specifically while the sample tube 126 may be positioned within the tube rack 128. The item of information of the sample tube 126 scanned by the scanning device 144 may be stored in the robot's data base, i.e. still as part of step d) of the method 166, specifically in the data base of the processor of the robot 114. Subsequently, i.e. as part of step D) of the method 194, the tube rack 128 may be moved, e.g. by using the multifunctional transport component 150 and the robotic arm 132, from the pipetting robot 130 to the desk where then the at least one cap of the at least one sample tube 126 may be screwed onto the sample tube 126, thereby once again closing the sample tube 126. Subsequently, i.e. as part of step E) of the method 194, the at least one sample tube 126 may be moved, e.g. by using the multifunctional transport component 150 and the robotic arm 132, from the desk to the at least one test instrument 116. As an example, an exact position of the test instrument 116 may be predetermined and/or preset, e.g. by using one or more mounting frames and/or baskets, into which the test instrument 116 may be positionable. As an example, the position of the test instrument 116 may be hardware coded by matching the carrying basket with a frame mounted to the surface of the desk and/or table. The frame and/or basket may also be configured to provide electrical contacts for powering the test instrument 116. Thus, as an example, the robot 114 may have access to a position information of the test instrument 116 allowing for a precise positioning of the at least one sample tube 126 into the sample receptacle 120 of the test instrument 116. Subsequently, e.g. as part of step E) of the method 194 and as part of step g) of the method 166, the artificial finger 143 may be used for turning on the power to the test instrument 116 and may further be used for entering a key combination into the input unit 118, indicating to the test instrument 116 that a "new test" is to be performed, and may further start the testing procedure, e.g. one or more measurements and/or analyses, performed by the test instrument 116. The item of information on the respective sample tube 126 provided to the test instrument 116, as stored in the data base, may simultaneously and/or subsequently be displayed on the e-paper display 148 and scanned by the test instrument's scanner 122. Once the test instrument 116 has performed the at least one test procedure, e.g. as part of step E) of the method 194 and as part of step k) of the method 166, the at least one sample tube 126 may be removed from the sample receptacle 120 of the test instrument 116 by using the tube gripper 140 and the robotic arm 132 of the robot 114. Subsequently, e.g. as part of step E) of the method 194 and as part of step 1) of the method 166, the at least one test instrument 116 may be returned to the trolley 172.

### List of reference numbers

- 110: test system
- 112: sample
- 114: robot
- 116: test instrument
- 118: input unit
- 120: tube receptacle
- 122: scanner
- 124: refrigerator
- 126: sample tube
- 128: tube rack
- 130: pipetting robot
- 132: robotic arm
- 134: base
- 136: end effector
- 138: joint
- 140: tube gripper
- 141: rotational movement unit
- 142: cap
- 143: artificial finger
- 144: scanning device
- 146: identifier
- 148: e-paper display
- 150: multifunctional transport component
- 152: handle
- 158: displacement unit
- 160: guiding rail
- 162: e-paper motion unit
- 164: control unit
- 166: method of automatically equipping and operating at least one test instrument
- 168: step a)
- 170: step b)
- 172: trolley
- 174: step c)
- 176: step d)
- 178: step e)
- 180: step f)
- 182: step g)
- 184: step h)
- 186: step i)
- 188: step j)
- 190: step k)
- 192: step 1)
- 194: method of automatically performing at least one test procedure
- 196: step A)
- 198: step B)
- 200: step C)
- 202: step D)
- 204: step E)

## Claims

1. A robot (114) for automatically equipping and operating at least one test instrument (116), comprising:
- at least one robotic arm (132) comprising at least one base (134) and at least one end effector (136), wherein the robotic arm (132) is configured for moving the end effector (136) from at least one first position to at least one second position;
- at least one tube gripper (140) arranged and connected to the at least one end effector (136) and configured for gripping and releasing at least one sample tube (126);
- at least one artificial finger (142) arranged and connected to the at least one end effector (136) and configured for operating at least one input unit (118) of the at least one test instrument (116);
- at least one scanning device (144) arranged and connected to the at least one end effector (136) and configured for scanning at least one item of information of the at least one sample tube (126);
- at least one e-paper display (148) configured for reproducing the at least one scanned item of information.

2. The robot (114) according to the preceding claim, wherein the robot (114) further comprises at least one multifunctional transport component (150) arranged and connected to the at least one end effector (136) and configured for picking and dropping one or more objects selected from the group consisting of: the test instrument (116); a tube rack (128); a drawer of a refrigerator (124).

3. The robot (114) according to the preceding claim, wherein the multifunctional transport component (150) comprises at least three functional elements configured for, by their interaction surfaces, picking one or more of the objects by at least one rotational movement and/or straight movement and for dropping the object by at least one reverse rotational and/or straight movement.

4. The robot (114) according to any one of the preceding claims, further comprising at least one displacement unit (158) configured for displacing one or more of the robot's components, such as one or more of the robotic arm (132) and the e-paper display (148), wherein the base (134) of the robotic arm (132) is mounted to the displacement unit (158), wherein the displacement unit (158) comprises at least one guiding rail (160).

5. The robot (114) according to any one of the preceding claims, further comprising at least one e-paper motion unit (162) arranged between the base (134) of the robotic arm (132) and the e-paper display (148) and configured for moving the e-paper display (148) within a radius starting from the base (134) in the range of from 1mm to 100mm.

6. The robot (114) according to any one of the preceding claims, wherein the tube gripper (140) further comprises a rotational movement unit (141) configured for rotating the tube gripper (140).

7. A method of automatically equipping and operating at least one test instrument (116), the method comprising:
a) providing at least one robot (114) according to any one of the preceding claims;
b) providing the at least one test instrument (116) comprising at least one input unit (118), at least one tube receptacle (120) and at least one scanner (122);
c) providing at least one sample tube (126) containing at least one sample (112);
d) scanning, by the scanning device (144), the at least one information of the sample tube (126);
e) displaying, by the e-paper display (148), the at least one information of the sample tube (126) to the scanner (122) of the test instrument (116);
f) placing the at least one sample tube (126) in the tube receptacle (120) of the test instrument (116), by gripping, moving and releasing the sample tube (126) by using the tube gripper (140) and the robotic arm (132);
g) operating the test instrument (116) by the artificial finger (143), such that the test instrument (116) performs at least one test on the sample (112) contained in the sample tube (126).

8. The method according to the preceding claim, wherein the method further comprises, specifically before step d),
h) placing the at least one test instrument (116) in a predefined testing position by using the robotic arm (132) and the at least one multifunctional transport component (150).

9. The method according to any one of the preceding method claims, wherein the method further comprises, before step g),
i) unscrewing, by the tube gripper 140 at least one cap 142 from the at least one sample tube 126; and after step g)
j) screwing, by the tube gripper 140 the at least one cap 142 onto the at least one sample tube 126.

10. The method according to any one of the preceding method claims, wherein step g) comprises inputting a key combination for a new test into the input unit (118) of the test instrument (116), wherein step g) further comprises switching on a power of the test instrument (116) by using the artificial finger (143).

11. The method according to any one of the preceding method claims, wherein step c) comprises providing a plurality of sample tubes (126) in at least one tube rack (128) and wherein in step f) the at least one sample tube (126) is picked from the tube rack (128).

12. The method according to any one of the preceding method claims, wherein the method further comprises, after step g),
k) collecting the at least one sample tube (126) from the tube receptacle (120) of the test instrument (116) and storing the at least one sample tube (126) in a predefined sample tube storing area by gripping, moving and releasing the sample tube (126) by using the tube gripper (140) and the robotic arm (132); and
l) retrieving the at least one test instrument (116) from the predefined testing position and storing the at least one test instrument (116) in a predefined test instrument storing area by using the robotic arm (132) and the at least one multifunctional transport component (150).

13. A test system (110) for automatically performing at least one test procedure on at least one sample (112), the test system (110) comprising:
- at least one robot (114) according to any one of the preceding claims referring to a robot (114);
- at least one test instrument (116) comprising at least one input unit (118), at least one tube receptacle (120) and at least one scanner (122);
- at least one refrigerator (124) configured for at least temporarily storing and cooling the at least one sample tube (126) arranged in at least one tube rack (128);
- at least one pipetting robot (130) configured for transferring liquid into the at least one sample tube (126).

14. The test system (110) according to the preceding claim, wherein the test system (110) comprises a plurality of sample tubes (126) in the at least one tube rack (128).

15. A method of automatically performing at least one test procedure, comprising
A) providing a test system (110) according to any one of the preceding claims referring to a test system (110);
B) retrieving, by the at least one robot (114), the at least one tube rack (128) holding the at least one sample tube (126) from the refrigerator (124) by using the robotic arm (132) and the at least one multifunctional transport component (150);
C) placing the at least one tube rack (128) in the pipetting robot (130) by using the robotic arm (132) and the at least one multifunctional transport component (150);
D) retrieving the at least one tube rack (128) from the pipetting robot (130) by using the robotic arm and the at least one multifunctional transport component, specifically its functional element configured for picking and dropping the tube rack, and storing the at least one tube rack in a predefined tube rack storing area;
E) performing at least steps d) to g), and optionally one or more of steps h), i), j), k) and l), of the method of automatically equipping and operating at least one test instrument according to any one of the preceding method claims, wherein in step f), the at least one sample tube is picked from the tube rack, and optionally in step k) the predefined sample tube storing area is the tube rack.
